# EUROPEAN PATENT APPLICATION

(11) **EP 3 451 287 A1**
(43) Date of publication of application: **06.03.2019**
(21) Application number: 17188683.1
(22) Date of filing: 31.08.2017
(51) Int. Cl.: G06T 7/12, G06T 15/04, G06T 17/00

(54) **IMAGE PROCESSING FOR ASSESSMENT OF FLAT ANATOMICAL STRUCTURES**

(71) Applicant: Koninklijke Philips N.V., 5656 AE Eindhoven (NL)
(72) Inventor: KLINDER, Tobias, 5656 AE Eindhoven (NL); VON BERG, Jens, 5656 AE Eindhoven (NL); LORENZ, Cristian, 5656 AE Eindhoven (NL)
(74) Representative: de Haan, Poul Erik

(57) **Abstract**

The invention relates to an image processing device (10) comprising a data input (11) for receiving a 3D diagnostic image and a segmentation unit (12) for segmenting a body cavity in the 3D diagnostic image and for determining a boundary surface thereof. The device also comprise a surface texture processor (13) for determining a surface texture for the boundary surface by projecting image information from a local neighborhood of the boundary surface in the 3D diagnostic image onto the boundary surface. The device comprises an output (14) for outputting a visual representation of at least one flat anatomical structure, such as at least one flat bone, adjacent to the body cavity by applying and visualizing the surface texture on the boundary surface.

## Description

### FIELD OF THE INVENTION

The invention relates to the field of diagnostic tomographic image processing. More specifically it relates to an image processing device, a workstation, a method for visualizing at least one flat bone adjacent to a body cavity and a computer readable storage medium.

### BACKGROUND OF THE INVENTION

Inspection of flat anatomical structures that are curved around a body cavity, for example flat bones enclosing a body cavity, such as the rib cage, based on diagnostic tomographic images, e.g. in computed tomography (CT), can be quite time-consuming. A detailed inspection of the rib cage may be required, for example, for fracture analysis and/or for the detection or follow-up of bone metastasis. However, the appearance of diseases or features of interest in rib cage analysis can be quite subtle, e.g. may involve subtle fractures or small metastases. Furthermore, 24 individual objects, twelve pairs of left and right ribs, may need to be inspected individually. The ribs are curved elongated structures, such that the inspection of each rib in planar slices, e.g. on axial cuts, can be time consuming on its own, e.g. efficiently following a rib may be difficult by inspection of the tomographic dataset in an axial view, as is commonly used.

For fracture assessment, e.g. as can be applied in an emergency department (ED), the number of rib fractures can influence an injury severity score, e.g. particularly where less than three rib fractures and three or more rib fractures are to be distinguished. Furthermore, in case of fractured ribs, the integrity of the pleura and the lungs needs to be evaluated as well.

The ribs may also form an important reference framework for locating other features of interest in the body, e.g. for guiding a manual inspection of a feature of interest or for assisting an automated segmentation or evaluation. For example, US 2015/0243026 discloses an automated segmentation of the rib cage in a tomographic image set. Furthermore, a mapping is used that maps one or more ribs to a location of a boundary of a lung lobe, to segment the lung lobe and to identify the lung lobe in functional image data.

It is known in the art to represent a rib structure by using a curved planar reformation (CPR) or fillet-view, in which the curved structure is visualized by a flattened view. Although such a fillet-view may assist in a quick assessment of the ribs, it may require, in a pre-processing step, a segmentation of the individual ribs. However, such segmentation can be challenging on its own, e.g. where complex and/or extensive fractures are involved, and may cause unexpected results when automatic segmentation fails. Furthermore, the fillet-view may provide a non-intuitively distorted view and may even cause artifacts in some cases.

### SUMMARY OF THE INVENTION

It is an object of embodiments of the present invention to provide good and efficient means and methods for the processing of diagnostic tomographic image data, e.g. a three-dimensional volumetric image, to intuitively visualize and analyze flat anatomical structures that are curved around a body cavity, e.g. flat bones enclosing a body cavity, such as ribs forming a rib cage.

References to 'flat' anatomical structures hereinbelow may refer to structures of the human (or animal) body that have a principal or major surface, e.g. a curved principal surface, of which the square root of the surface area is substantially larger (e.g. at least 5 times larger, e.g. at least 10 times larger, or even at least 20 times larger) than a thickness of the structure in a direction normal to that surface. Where the 'flat' anatomical structure is a flat bone, this may particularly refer to the anatomical definition of a flat bone.

The above objective is accomplished by a method and device according to the present invention.

It is an advantage of embodiments of the present invention that an assessment of flat anatomical structures enclosing a body cavity, e.g. of flat bones such as the rib cage, can be performed efficiently based on a tomographic image set, e.g. a computed tomography (CT) or magnetic resonance imaging (MRI) three-dimensional image.

It is an advantage of embodiments of the present invention that only the information in the tomographic image set is shown that is relevant for an assessment of the flat anatomical structures.

It is an advantage of embodiments of the present invention that segmentation of individual flat anatomical structures, such as individual flat bones, is not required. Embodiments of the present invention may therefore advantageously be more robust and/or more computationally efficient than a prior-art alternative that would require such segmentation. For example, the shape of a body cavity and of its boundary may be substantially more regular and easier to segment in a three-dimensional image than the flat bone, flat bones or other flat anatomical structures that enclose and support such cavity, e.g. the thoracic cavity may be substantially easier to detect and segment in a 3D image, such as a CT scan, than the individual ribs supporting the thoracic cavity. This may be even more so in case of complex fractures or anatomical deviations.

It is an advantage of embodiments of the present invention that flat bones, e.g. ribs, or other flat anatomical structures are not extensively distorted when visualized, e.g. features in the axial and/or azimuthal directions may be undistorted or only lightly distorted. It is a further advantage of embodiments that a rib cage, a pelvic bone complex or similar flat anatomical structure enclosing a body cavity, e.g. a body cavity wall comprising muscle tissue, membrane tissue, bony structures and/or connective tissue, can be visualized in a single planar image that can be intuitively interpreted.

It is an advantage of embodiments of the present invention that a correspondence between coordinates in the single planar image visualization and coordinates in the tomographic image set can be easily established and referenced, for example to display a corresponding image slice by selecting a position on a visual representation generated in accordance with embodiments of the present invention.

It is a further advantage of embodiments of the present invention that a visual representation can be easily enriched by labelling features of interest.

In a first aspect, the present invention relates to an image processing device comprising a data input for receiving (e.g. configured to receive) data representative of a three-dimensional diagnostic image and a segmentation unit for segmenting (e.g. configured and/or programmed to segment) at least a part of a body cavity in the three-dimensional diagnostic image and for determining (e.g. configured and/or programmed to determine) at least a part of a boundary surface of the body cavity. The device also comprises a surface texture processor for determining (e.g. configured and/or programmed to determine) a surface texture for the boundary surface by projecting image information from a local neighborhood of the boundary surface in the three-dimensional diagnostic image onto the boundary surface. The device furthermore comprises an output for outputting a visual representation of at least one flat anatomical structure adjacent to the body cavity, e.g. at least one flat bone adjacent to the body cavity, by applying and visualizing the surface texture on the boundary surface.

In an image processing device in accordance with embodiments of the present invention, the surface texture processor may be adapted for, for each boundary surface element of the boundary surface, collecting voxel values from a local neighborhood (in the data, e.g. in the 3D diagnostic image) that extends in a direction normal to the boundary surface at the location of that boundary surface element.

In an image processing device in accordance with embodiments of the present invention, the local neighborhood may be adjacent to the exterior side of the boundary surface element, or may extend to either side of the boundary surface element. For example, it is an advantage of defining the local neighborhood such as to extend on either side of the boundary surface that inaccuracies in detecting the boundary surface during segmentation may have only a limited, or even negligible, impact when constructing a visualization of (a) flat anatomical structure (s) adjacent to the body cavity.

In an image processing device in accordance with embodiments of the present invention, the local neighborhood may correspond to a predetermined or dynamically learned range of distance with respect to the boundary surface.

In an image processing device in accordance with embodiments of the present invention, the predetermined or dynamically learned range may vary with respect to the boundary surface element.

In an image processing device in accordance with embodiments of the present invention, the surface texture processor may be adapted for summarizing, for each boundary surface element, the collected voxel values into at least one value such that a plurality of these values, defined over the plurality of boundary surface elements, forms the surface texture.

In an image processing device in accordance with embodiments of the present invention, the surface texture processor may be adapted for summarizing the voxel values into the at least one value by calculating a maximum of the collected voxel values. It is an advantage that such maximum intensity projection applied to a local neighborhood of the cavity wall can accurately represent a bony structure in the vicinity of the cavity.

In an image processing device in accordance with embodiments of the present invention, the data input may be adapted for receiving the data representative of volumetric image data, organized in voxels, obtained by imaging an imaged region of a human body using computed tomography or magnetic resonance imaging, in which the imaged region comprises the body cavity and the at least one flat anatomical structure, e.g. the at least one flat bone, adjacent to the body cavity.

In an image processing device in accordance with embodiments of the present invention, the segmentation unit may be adapted for segmenting the body cavity, in which the body cavity is a thoracic cavity, a pelvic cavity, an abdominopelvic cavity or a combination of a thoracic cavity and an abdominopelvic cavity.

In an image processing device in accordance with embodiments of the present invention, the at least one flat anatomical structure may comprise at least one flat bone, e.g. the at least one flat anatomical structure may comprise one or more ribs, a sternum, one or more vertebrae and/or a pelvic bone complex.

In an image processing device in accordance with embodiments of the present invention, the segmentation unit may be adapted for applying a model-based volumetric image segmentation method by fitting a model of the volume and/or boundary surface of the body cavity to the data.

In an image processing device in accordance with embodiments of the present invention, the model may comprise a wire mesh model of said boundary surface.

In an image processing device in accordance with embodiments of the present invention, the output may be adapted for outputting the visual representation comprising a static or dynamic projection view of a three-dimensional model corresponding to the boundary surface.

In an image processing device in accordance with embodiments of the present invention, the output may be adapted for applying the surface texture by coloring the boundary surface accordingly.

An image processing device in accordance with embodiments of the present invention may comprise a user interface for enabling a user to manipulate the visual representation dynamically.

In an image processing device in accordance with embodiments of the present invention, the visual representation may correspond to an exterior view or an interior view, relative to the body cavity, of the boundary surface.

In an image processing device in accordance with embodiments of the present invention, the visual representation may comprise the boundary surface dissected into two parts which are visualized concurrently.

In an image processing device in accordance with embodiments of the present invention, the visual representation may comprise a planar representation of the boundary surface.

In an image processing device in accordance with embodiments of the present invention, the output may be adapted for cutting open the boundary surface along at least one line, e.g. for disconnecting a mesh grid along the line to change a spherical topology or a cylindrical topology (e.g. a spherical topology having two punctures) of the mesh grid into a planar topology, and for unfolding and flattening a mesh of the boundary surface into a planar configuration.

An image processing device in accordance with embodiments of the present invention may also comprise a labelling unit for labelling flat bones and/or other anatomical features of interest on the visual representation.

In a second aspect, the present invention also relates to a workstation, e.g. a computed tomography workstation or a magnetic resonance imaging workstation, comprising an image processing device in accordance with any of the previous claims.

In a third aspect, embodiments of the present invention also relate to a computed tomography system comprising an image processing device in accordance with embodiments of the first aspect of the present invention.

In a fourth aspect, the present invention also relates to a method for visualizing at least one flat anatomical structure adjacent to a body cavity. The method comprises receiving data representative of a three-dimensional diagnostic image, segmenting at least a part of the body cavity in the three-dimensional diagnostic image and determining at least a part of a boundary surface of the body cavity, determining a surface texture for the boundary surface by projecting image information from a local neighborhood of the boundary surface in the three-dimensional diagnostic image onto the boundary surface and generating a visual representation of the at least one flat anatomical structure adjacent to the body cavity by applying and visualizing the surface texture on the boundary surface.

In a fifth aspect, the present invention also relates to a computer readable storage medium encoded with one or more computer executable instructions, which, when executed by a processor of a computing system, causes the computing system to perform a method in accordance with embodiments of the fourth aspect of the present invention.

In a sixth aspect, the present invention also relates to a computer program product for, if implemented on a processing unit, performing a method in accordance with embodiments of the fourth aspect of the present invention.

In a seventh aspect, the present invention also relates to a transmission of the computer program product in accordance with embodiments of the sixth aspect of the present invention over a network.

In an eighth aspect, the present invention also relates to image data, e.g. corresponding to the generated visual representation, obtained by a method in accordance with embodiments of the fourth aspect of the present invention.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### BRIEF DESCRIPTION OF THE DRAWINGS

FIG 1 illustrates an exemplary image processing device in accordance with embodiments of the present invention.
FIG 2 shows a system and a workstation in accordance with embodiments of the present invention.
FIG 3 illustrates a method in accordance with embodiments of the present invention.
FIG 4 illustrates a segmentation in accordance with embodiments of the present invention.
FIG 5 illustrates a boundary surface in accordance with embodiments of the present invention.
FIG 6 shows a first exemplary visual representation of bony structures enclosing and/or supporting the thoracic cavity, for illustrating embodiments of the present invention.
FIG 7 to FIG 10 show second exemplary planar visual representations of the bony structures enclosing and/or supporting the thoracic cavity, for illustrating embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### DETAILED DESCRIPTION OF ILLUSTRATIVE EMBODIMENTS

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, embodiments of the present invention relate to an image processing device that comprises a data input for receiving data representative of a three-dimensional diagnostic image, e.g. volumetric image data organized in voxels, such as obtained by CT, MRI, nuclear imaging or other tomographic diagnostic and/or medical imaging modalities.

The image processing device further comprises a segmentation unit for segmenting at least a part of a body cavity in the three-dimensional diagnostic image and determining at least a part of the boundary surface of the body cavity.

The image processing device also comprises a surface texture processor for determining a surface texture for the boundary surface by projecting image information from a local neighborhood of the boundary surface in the 3D diagnostic image onto the boundary surface. The image processing device furthermore comprises an output for outputting a visual representation of at least one flat anatomical structure, such as at least one flat bone, adjacent to the body cavity by applying and visualizing the surface texture on the boundary surface.

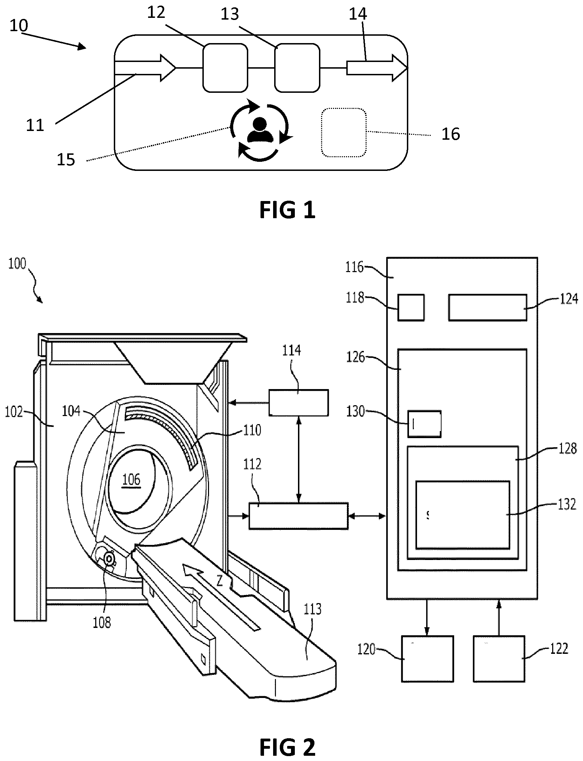

FIG 1 illustrates an exemplary image processing device 10 in accordance with embodiments of the present invention. The image processing device may comprise a computing device, such as a computer programmed for providing the functionality as described hereinbelow. The computing device may comprise a configurable hardware device, e.g. a field-programmable gate array, configured for providing the intended functionality or may comprise application specific circuitry specifically designed for providing the intended functionality. The computing device may comprise any combination of designed hardware, configured hardware and/or software for executing on general purpose hardware.

Thus, components of an image processing device 10 in accordance with embodiments of the present invention, such as a data input, a segmentation unit, a surface texture processor and/or an output, do not necessarily correspond to physically separate entities of such device, e.g. physically separable components, but may refer to a software construct that is implemented in a computer code for executing on a general purpose computer and/or a hybrid construct comprising both software and hardware elements.

The image processing device 10 comprises a data input 11 for receiving data representative of a three-dimensional (3D) diagnostic image, e.g. volumetric image data organized in voxels, such as obtained by computed tomography (CT), magnetic resonance imaging (MRI), nuclear imaging or other tomographic diagnostic and/or medical imaging modalities. For example, the data may represent image data organized in voxels, such as obtained from a conventional CT system, a cone beam CT system, a dual-energy or spectral CT system, an MRI scanner, a PET or SPECT scanner, a tomographic ultrasound imager or a tomographic imager of an image-guided radiation therapy system.

Particularly, the data input may comprise a digital communication circuit, such as a computer network interface, a wireless transmission interface or a digital data bus interface, for receiving the data from an external source, such as a diagnostic scanner, e.g. a CT or MRI scanner, or a reconstructor for reconstructing images provided by such a diagnostic scanner, e.g. a CT or MRI scanner. The data input may comprise a virtual interface for receiving the data from another software component implemented on a shared hardware platform, e.g. from another software component executing on the same computer, such as a software component for reconstructing CT image data. Such virtual interface may for example comprise an application programming interface, a shared memory resource or a file stored using a filesystem standard on a data carrier. The data input may comprise an interface for accessing a data carrier, such as an optical disk reader, a universal serial bus (USB) connection for accessing a USB data storage medium, a magnetic disk reader or a portable flash drive reader. The data input may comprise any combination of the means mentioned hereinabove, and/or other devices known in the art suitable for receiving digital volumetric image data.

The data may be organized in voxels, e.g. comprising a plurality of data values linked to corresponding voxel locations in a scanned object, e.g. a scanned subject, e.g. a body of a human subject. The data may thus comprise reconstructed image data organized in voxels, e.g. representative of different positions in the scanned object with respect to a three-dimensional coordinate system. Each voxel may have a value associated therewith, e.g. a greyscale value such as a value expressed in Hounsfield units, that is indicative of attenuation characteristics of the scanned object at the position corresponding to the voxel, e.g. indicative of a radiodensity, e.g. of a relative radiodensity. Each voxel may have a value associated therewith that is indicative of another physical characteristic of the scanned object at the position corresponding to the voxel, such as related to magnetic resonance relaxation properties or elastic properties. The image data may be acquired, e.g. pre-recorded, using a diagnostic scanning technique known in the art.

The image processing device further comprises a segmentation unit 12 for segmenting at least a part of a body cavity, e.g. for segmenting a body cavity, in the three-dimensional diagnostic image. For example, the data received as input may relate to image data of a body of a subject, in which the imaged region of the body comprises the body cavity to be segmented. The body cavity may be a visceral cavity. The body cavity may be a dorsal body cavity, e.g. a cranial cavity, or may be a ventral body cavity, e.g. a thoracic cavity, a pelvic cavity, an abdominal cavity, an abdominopelvic cavity or a combination of the thoracic cavity and abdominopelvic cavity.

The segmentation unit 12 is further adapted for determining at least a part of the boundary surface of the body cavity, e.g. for determining the boundary surface of the body cavity.

For example, the segmentation unit 12 may be adapted for, e.g. configured and/or programmed for, segmenting the data, e.g. partitioning the data, into a part inside the body cavity and a part outside the body cavity.

The segmentation unit may apply a segmentation method as known in the art, e.g. a model-based volumetric image segmentation method. For example, the segmentation unit 12 may be adapted for fitting a model of the volume and/or surface of the body cavity to the data. For example, the model may be a model of the boundary surface of the body cavity, such as a wire mesh model. The segmentation unit may be adapted for initializing the model, e.g. by scaling, positioning, rotating and/or skewing the model in accordance with the data. The segmentation unit may also be adapted for adapting, adjusting, deforming and/or reconfiguring the model in accordance with the data, e.g. by optimizing node positions of a wire mesh representation of the model. The initialization and/or the adaptation of the model may take a cost function into account, e.g. may comprise an optimization of a cost function. For example, embodiments of the present invention not being limited thereto, such cost function may comprise terms and/or factors relating to any one the following or any combination of the following:
an edge and/or 'surfaceness' metric of the image data along the boundary surface;
   a regularization of the boundary surface curvature or other shape-related regularization of the model;
an average voxel value, variance measure, another statistical moment or measure, e.g. taken or statistically summarized over a region inside the boundary and/or, preferably separately, over a region outside the boundary;
a deviation from a reference of any value as indicated hereinabove;
a difference between similarly collected values, as indicated hereinabove, for respectively a region inside and outside the boundary;
any other optimization criterium or criteria as known to the skilled person for performing digital image segmentation.

Embodiments of the present invention are not necessarily limited to model-based segmentation. For example, an image-based segmentation may be applied to detect the body cavity, e.g. by applying any one of, or any combination of: image filtering, morphological filtering, a watershed operation, a thresholding or histogram-based method, clustering, edge detection and other segmentation techniques known in the art. For example, the segmentation unit may assign to each voxel a label indicative of the voxel being assigned to the body cavity or being outside the body cavity. The segmentation unit may determine the voxels belonging to the boundary surface or may construct a parametric model of the boundary surface, e.g. a wire mesh model.

Alternatively (or additionally), the segmentation unit may be adapted for implementing a machine learning, e.g. deep learning, algorithm to segment the body cavity and/or the boundary surface. For example, such algorithm could apply a supervised, unsupervised or semi-supervised learning approach. The algorithm may comprise a support vector machine (SVM) approach, a Bayesian learning approach, a clustering approach, an artificial neural network or self-organizing map (SOM) approach, a least absolute shrinkage and selection operator (LASSO) or elastic net approach, an ensemble algorithm, a dimensionality reduction algorithm and/or an abundant computation approach, such as a deep Boltzmann machine, deep belief network, convolutional neural network or stacked auto-encoder.

The image processing device also comprises a surface texture processor 13 for determining a surface texture for the boundary surface by projecting image information from a local neighborhood of the boundary surface in the 3D diagnostic image onto the boundary surface.

For example, for each element of the boundary surface, voxel values, e.g. image intensities or grey values, may be collected from a local neighborhood, e.g. adjacent to the exterior side or alternatively extending to either side of the boundary surface element, that extends in a direction normal to the boundary surface at the location of that element. The voxel values may be summarized into at least one value, e.g. into a single value, associated with the boundary surface element. The plurality of such values, defined over the plurality of boundary surface elements, may form the surface texture.

For example, each voxel on the boundary surface may correspond to a boundary surface element, or each mesh element of the boundary surface may correspond to a boundary surface element, e.g. each triangle in a triangulated surface mesh model.

For example, in embodiments of the present invention, for each triangle of a surface mesh forming the boundary surface determined by the segmentation unit, image intensities may be collected along the surface normal within a predetermined range. For example, this predetermined range may extend from the surface toward the outside of the surface, or may extend to both the inside and the outside of the surface.

The local neighborhood may correspond to a predetermined range, e.g. a number of voxels or a distance. The predetermined range may be uniform over the boundary surface elements, or may differ between boundary surface elements. For example, in a model-based segmentation, an initial model of the body cavity may predefine a range for each element of the initial model, e.g. based on prior anatomical knowledge. The local neighborhood may also be dynamically determined or learned, e.g. from a single dataset being processed or from a historical record of previous range settings for the local neighborhood, e.g. globally or for each specific boundary surface element. The local neighborhood may also correspond to a configurable range, e.g. may be adjusted by a user to re-compute the visual representation in (near) real-time.

The collected voxel values may be summarized into at least one value by a statistical summary operator, for example, by calculating an average, a median, a minimum, a maximum or a predetermined quantile of the collected voxel values. The statistical summary operator may be determined by taking the image modality of the data and the flat anatomical structure(s) of interest into account. For example, for bony structures and an x-ray imaging modality, a maximum of the collected voxel values, which may be expressed in Houndsfield units, may be a suitable operation to create an anatomically relevant texture map. However, as will be clear to the skilled person, for other imaging modalities and/or other tissues of interest, another operator, as known in the art, could be better suited.

For example, in an example where the data relates to image data in which bone is typically manifested by high image values, e.g. in computed tomography, the maximum of the collected voxel values, for each boundary surface element, may be associated with that boundary surface element, to collectively form the surface texture over the plurality of boundary surface elements.

The image processing device furthermore comprises an output 14 for outputting a visual representation of the surface texture applied onto the boundary surface. For example, the visual representation may comprise a static or dynamic projection view of a three-dimensional model corresponding to the boundary surface. The surface texture may be applied by coloring the boundary surface, e.g. changing a color, e.g. a hue, saturation and/or luminosity, in accordance with the surface texture, e.g. the values determined for the boundary surface elements. The surface texture may be applied by changing a simulated material property of the three-dimensional model, e.g. a light emission property, a shininess property, a light diffusion property, a translucence property, a transparency property, and/or a specular reflection property.

The image processing device may comprise a user interface 15 for enabling a user to manipulate the visual representation, e.g. to change the projection view of the three-dimensional model and/or to switch between different display modes, e.g. different visual representations of the same boundary surface, and/or to adjust a parameter to recalculate the segmentation and/or texture, e.g. a regularization parameter used for segmenting the cavity or a depth parameter defining the range over which the voxel values are collected to compute the texture.

However, embodiments of the present invention do not necessarily require such user interface. For example, the output may generate an image in a digital image storage format, e.g. a 2D or 3D image format, to be exported to another system for evaluation and/or storage.

The visual representation may correspond to an exterior view of the boundary surface. The visual representation may correspond to an interior view of the boundary surface.

The visual representation may comprise the boundary surface dissected into two parts, e.g. two halves, and visualized concurrently. For example, this allows a user to evaluate the enclosure of the body cavity in a single view, e.g. without requiring a rotation of a displayed projection. For example, the full thorax may be presented in a single view (comprising an anterior part and a posterior part) to efficiently evaluate the rib cage.

For example, an anterior view and a posterior view of the boundary surface may be presented simultaneously. The anterior view and the posterior view may be generated from a view point outside the cavity or may be generated from a view point inside the cavity, e.g. may correspond to exterior views or interior views.

The visual representation may comprise a planar representation of the boundary surface, e.g. obtained by flattening a mesh of the boundary surface into a planar configuration. For example, the boundary surface may be cut open along a line such as to unfold and flatten the boundary surface. For example, the boundary surface may be cut in two parts, e.g. an anterior part and a posterior part, and each part may be flattened separately and presented concurrently. The texture information may be applied to the planar representation, e.g. as already discussed hereinabove. Flattening may comprise an optimization of the surface (or part thereof) to simultaneously satisfy a flatness constraint, e.g. attributing a cost to be minimized to coordinate variation along the sagittal axis, and minimizing a deviation from the original boundary surface. Flattening may also comprise a heuristic unfolding and/or flattening approach by applying a predefined mapping of coordinates of the three-dimensional boundary surface to a plane, e.g. a projection, such as a planar projection or a cylindrical projection.

The image processing device may also comprise a labelling unit 16 for labelling flat bones and/or other anatomical features of interest on the visual representation. For example, different flat bones and/or features of interest on a single flat bone may be labelled separately. For example, each rib may be labelled accordingly. For example, landmarks on the pelvic bone complex, e.g. the coxae, the sacrum, the ilium, the ischia, the pubis, the pubic symphysis, the acetabulum, the foramen obturatum and/or the coccyx. However, this is only exemplary, e.g. individual aspects of each rib may be labelled separately, or the pelvic bone complex may be labelled in greater or less detail, e.g. parts of a bone may be labelled individually, e.g. the corpus, rami and tuberculum of the pubis. Where reference is made to labels relating to flat bones or segmentation of flat bones hereinbelow, it shall be understood that this may also relate to more detailed aspects of a single flat bone and/or other anatomical features or structures of interest, such as connective tissues, membranes, muscles and/or parts thereof, e.g. landmark features thereof.

For example, annotation text may be provided in an overlay on the visual representation. For example, the segmentation unit may be adapted for also segmenting the flat anatomical structures of interest, e.g. flat bones, such as ribs, adjacent to the body cavity, e.g. the thoracic cavity, e.g. individually segmenting the flat bones, and for registering a label to a point or region on the visual representation that corresponds to each flat anatomical structure.

Alternatively, the labels may be linked to predetermined nodes of the wire mesh representation of the boundary surface, e.g. linked to predetermined nodes in an initial model that is reconfigured to fit the image data, e.g. such that the labels coevolve with the model while adapting the model to fit the image data. For example, the cavity model may preserve anatomical correspondence, such that respectively labeled surface portions of the mesh model can indicate flat bones, e.g. ribs, and/or probability regions associated with the flat bones, e.g. ribs.

Alternatively, the image processing device may be adapted to perform a two-dimensional segmentation of the surface texture to detect features of interest, e.g. to detect the flat bones adjacent to the body cavity, e.g. to detect and discern individual ribs of a rib cage. It is an advantage that a 2D segmentation of the surface texture may be more efficient and/or more robust than a direct segmentation of the flat anatomical structures on the 3D image data. Thus, the labelling may also take a 2D segmentation of the surface texture into account.

The user interface may also be adapted for highlighting a structure, e.g. a flat bone, e.g. a rib, in the visual representation when hovering over the structure using a pointing device. The user interface may also be adapted for selecting, by user interaction, a flat bone or a combination of flat bones and displaying the selection isolated in the visual representation, and/or, removing the selection from the visual representation.

In a second aspect, embodiments of the present invention also relate to a workstation, e.g. a computed tomography workstation or a magnetic resonance imaging workstation, comprising an image processing device in accordance with embodiments of the first aspect of the present invention. For example, embodiments of the present invention may relate to a workstation such as the computing system 116 described further hereinbelow in relation to FIG 2.

In a third aspect, embodiments of the present invention also relate to a computed tomography system comprising an image processing device in accordance with embodiments of the first aspect of the present invention. For example, embodiments of the present invention may relate to a computed tomography system such as the imaging system 100 described hereinbelow in relation to FIG 2.

FIG 2 illustrates an imaging system 100 comprising a computed tomography (CT) scanner. The imaging system 100 may comprise a generally stationary gantry 102 and a rotating gantry 104. The rotating gantry 104 may be rotatably supported by the stationary gantry 102 and may rotate around an examination region 106 about a longitudinal axis Z.

A radiation source 108, such as an x-ray tube, may be rotatably supported by the rotating gantry 104, e.g. such as to rotate with this rotating gantry 104, and may be adapted for emitting poly-energetic radiation that traverses the examination region 106. The radiation source 108 may comprise, or consist of, a single broad spectrum x-ray tube. Alternatively, the radiation source may be adapted for controllably switching between at least two different photon emission spectra, e.g. switching between at least two different peak emission voltages, such as 80 kVp, 140 kVp, etc., during scanning. In another variation, the radiation source 108 may comprise two or more x-ray tubes configured to emit radiation with different mean spectrums. In another variation, the radiation source 108 may comprise a combination of the above. Alternatively or additionally, the radiation sensitive detector array 110, further discussed hereinbelow, may be adapted for spatially and spectrally resolving radiation, e.g. for distinguishing different energies, e.g. different energy ranges.

A radiation sensitive detector array 110 may subtend an angular arc opposite the radiation source 108 across the examination region 106. The array 110 may include one or more rows of detectors arranged with respect to each other along the Z-axis direction. The array 110 may be adapted for detecting radiation traversing the examination region 106, and generating signals indicative thereof. The array 110 may comprise a radiation detector.

The system may comprise a reconstructor 112 for reconstructing the signals output by the detector array 110. The reconstructor 112 may be adapted for reconstructing the signals and generating one or more tomographic images.

The system may comprise a subject support 113, such as a couch, for supporting an object or subject in the examination region. The system may also comprise an operator console 114, e.g. a general purpose computer programmed for controlling or monitoring the system 100 and/or for providing a user interface for an operator. The console 114 may include a human readable output device such as a monitor or display and an input device such as a keyboard and mouse. Software resident on the console 114 may allow the operator to interact with the scanner 100 via a graphical user interface (GUI) or otherwise. This interaction may include selecting an imaging protocol, initiating scanning, etc.

The imaging system 100 may be operably connected to a workstation, e.g. computing system 116, such as a computer, that may comprise an input/output (I/O) interface 118 for facilitating communication with the CT scanner. The imaging system 100 may comprise the computing system 116 as a system-level integrated component, or the imaging system 100 may be adapted for communicating with a stand-alone computing system 116, e.g. to transmit image data to the computing system 116.

The computing system 116 may further comprise an output device 120. The output device or output devices may comprise, for example, a display monitor, a film printer, a paper printer and/or an audio output for audio feedback. The computing system may also comprise an input device 122 or input devices, such as a mouse, a keyboard, a touch interface and/or a voice recognition interface. The computing system 116 may also comprise at least one processor 124, such as a central processing unit (CPU), a microprocessor, a dedicated application-specific integrated circuit (ASIC) for processing and/or an appropriately configured programmable hardware processor such as a field-programmable gate array. The computing system may comprise a computer readable storage medium 126, e.g. a non-transitory memory such as a physical digital memory. The computer readable storage medium 126 may store computer readable instructions 128 and data 130. The at least one processor 124 may be adapted for executing the computer readable instructions 128. The at least one processor 126 may also execute computer readable instructions carried by a signal, carrier wave or other transitory medium. Alternatively or additionally, the at least one processor may be physically configured to embody the instructions 128, e.g. entirely or in part, without necessarily requiring memory storage of these instructions, e.g. by configuration of a field-programmable gate array or an ASIC specifically designed to carry out at least a part of the instructions.

The computing system may be programmed, e.g. in accordance with the computer readable instructions referred to hereinabove, to implement an image processing device in accordance with embodiments of the first aspect of the present invention.

The instructions 128 may comprise an image processing algorithm 132 for performing a method in accordance with embodiments of a fourth aspect of the present invention.

In a fourth aspect, embodiments of the present invention also relate to a method for visualizing at least one flat anatomical structure adjacent to a body cavity, such as at least one flat bone adjacent to the body cavity.

Details of methods in accordance with embodiments of the present invention shall be clear in relation to the description provided hereinabove relating to embodiments of the first aspect of the present invention. Particularly, functions performed by a device in accordance with embodiments of the present invention shall be understood as constituting corresponding steps and/or features of a method in accordance with embodiments of the present invention.

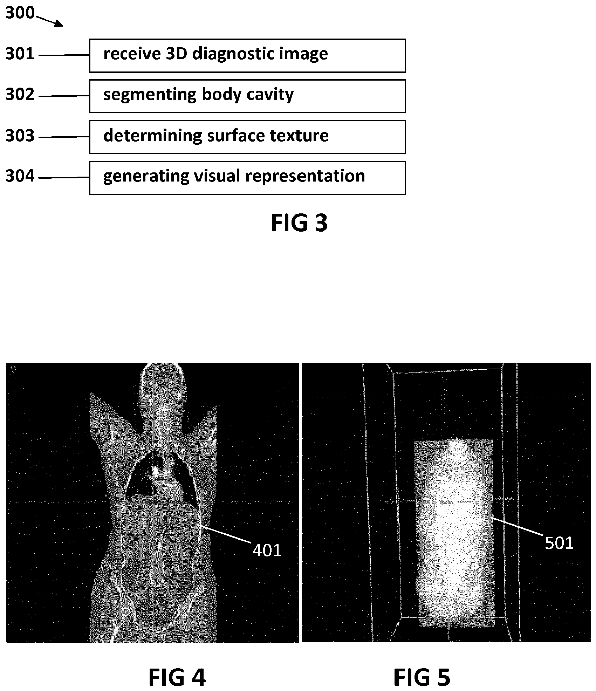

FIG 3 illustrates an exemplary method 300 in accordance with embodiments of the present invention.

The method 300 comprises a step of receiving 301 data representative of a three-dimensional diagnostic image.

The method 300 also comprises segmenting 302 at least a part of the body cavity in the three-dimensional diagnostic image and determining at least a part of a boundary surface of the body cavity.

The method 300 further comprises determining 303 a surface texture for the boundary surface by projecting image information from a local neighborhood of the boundary surface in the three-dimensional diagnostic image onto the boundary surface.

The method 300 also comprises generating 304 a visual representation of the at least one flat anatomical structure adjacent to the body cavity by applying and visualizing the surface texture on the boundary surface.

In a fifth aspect, embodiments of the present invention also relate to a computer readable storage medium encoded with one or more computer executable instructions, which, when executed by a processor of a computing system causes the computing system to perform a method in accordance with embodiments of the fourth aspect of the present invention.

In a first example, FIG 4 to 6 illustrate an application of embodiments of the present invention. FIG 4 shows a frontal image slice of a 3D diagnostic CT scan, on which the boundary surface 401 of a segmentation of the ventral visceral cavity is indicated. FIG 5 shows a visual representation, e.g. a projection view of the three-dimensional boundary surface, of the boundary surface.

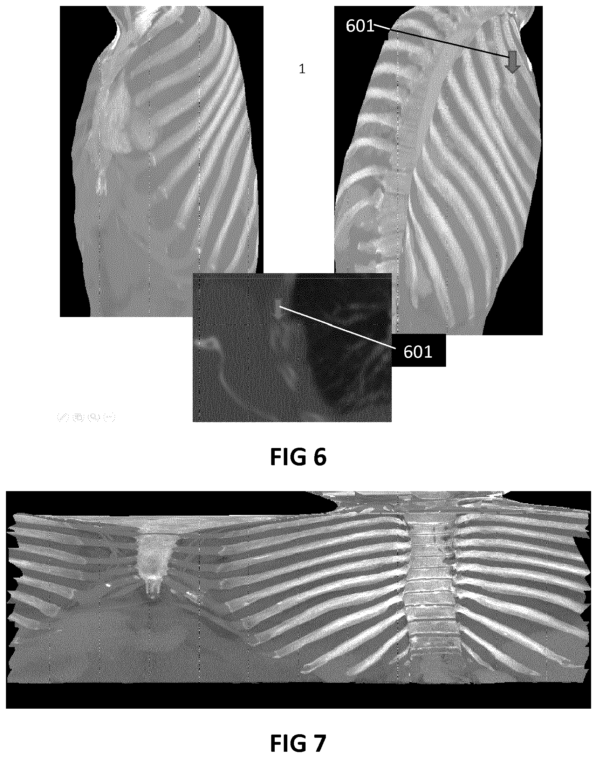

FIG 6 shows a visual representation comprising two halves of the boundary surface visualized separately and concurrently. The texture was obtained by applying a maximum intensity projection in the normal direction to the boundary surface over a range extending from 10 mm away from the boundary surface on the inside of the cavity to 10 mm away from the boundary surface on the outside of the cavity. The arrow indicator 601 indicates a broken rib. In embodiments of the present invention, a user interface can be used to point at a position on the visual representation, e.g. as indicated by the arrow indicator 601. The user interface may be adapted for looking up a 3D coordinate corresponding to the indicated position, e.g. by calculating the intersection of the view ray corresponding to the indicated position on the (2D) view with the boundary surface. The user interface may be adapted for showing an image slice of the 3D volumetric data corresponding to that 3D coordinate, e.g. the axial slice shown in FIG 6.

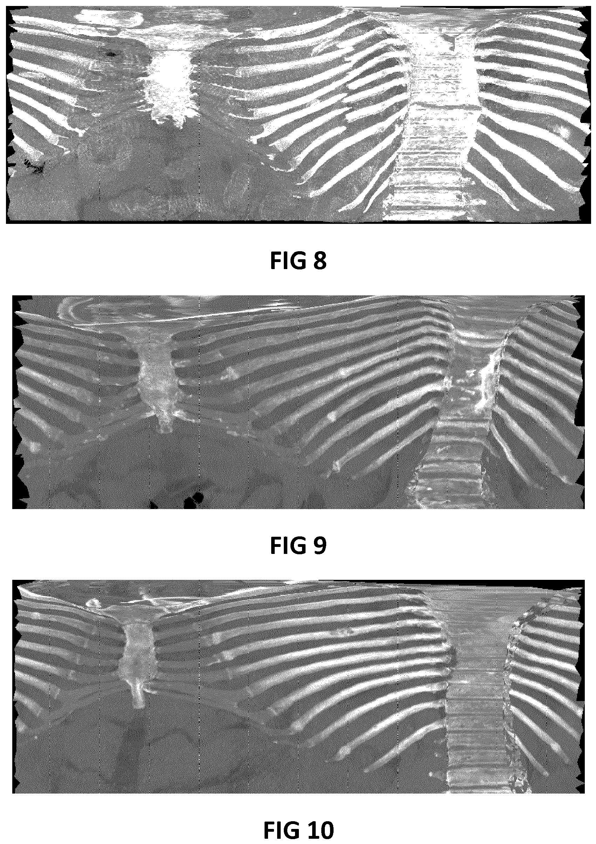

FIG 7 to FIG 10 show exemplary planar visual representations (e.g. flattened visual representations) of the bony structures enclosing and/or supporting the thoracic cavity. Such visualization may advantageously allow a quick and full overview of the bones supporting the cavity, e.g. in a single glance. For example, abnormalities can be detected without requiring any interaction. FIG 7 shows a view with no distinguishable abnormalities. FIG 8 shows multiple rib and vertebral body fractures. FIG 9 shows rib lesions, possibly indicative of healed fractures or bone cancer. FIG 10 shows another rib lesion, possibly indicative of a cyst.

## Claims

1. An image processing device (10) comprising:
a data input (11) for receiving data representative of a three-dimensional diagnostic image;
a segmentation unit (12) for segmenting at least a part of a body cavity in the three-dimensional diagnostic image and for determining at least a part of a boundary surface of said body cavity;
a surface texture processor (13) for determining a surface texture for said boundary surface by projecting image information from a local neighborhood of the boundary surface in said three-dimensional diagnostic image onto said boundary surface; and
an output (14) for outputting a visual representation of at least one flat anatomical structure adjacent to said body cavity by applying and visualizing said surface texture on said boundary surface.

2. The image processing device of claim 1, wherein said surface texture processor (13) is adapted for, for each boundary surface element of the boundary surface, collecting voxel values from a local neighborhood that extends in a direction normal to the boundary surface at the location of that boundary surface element.

3. The image processing device of claim 2, wherein said local neighborhood corresponds to a predetermined range of distance with respect to the boundary surface.

4. The image processing device of claim 2 or claim 3, wherein said surface texture processor (13) is adapted for summarizing, for each boundary surface element, said collected voxel values into at least one value such that a plurality of said values, defined over the plurality of boundary surface elements, forms said surface texture.

5. The image processing device of claim 4, wherein said surface texture processor (13) is adapted for summarizing said voxel values into said at least one value by calculating a maximum of the collected voxel values.

6. The image processing device of any of the previous claims, wherein said data input (11) is adapted for receiving said data representative of volumetric image data, organized in voxels, obtained by imaging an imaged region of a human body using computed tomography or magnetic resonance imaging, said imaged region comprising said body cavity and said at least one flat anatomical structure adjacent to said body cavity.

7. The image processing device of any of the previous claims, wherein said segmentation unit (12) is adapted for segmenting said body cavity, in which said body cavity is a thoracic cavity, a pelvic cavity, an abdominopelvic cavity or a combination of a thoracic cavity and an abdominopelvic cavity, and wherein said at least one flat anatomical structure comprises one or more ribs, a sternum, one or more vertebrae and/or a pelvic bone complex.

8. The image processing device of any of the previous claims, wherein said segmentation unit (12) is adapted for applying a model-based volumetric image segmentation method by fitting a model of the volume and/or boundary surface of said body cavity to said data.

9. The image processing device of any of the previous claims, wherein said output (14) is adapted for outputting said visual representation comprising a static or dynamic projection view of a three-dimensional model corresponding to the boundary surface.

10. The image processing device of any of the previous claims, comprising a user interface (15) for enabling a user to manipulate said visual representation dynamically.

11. The image processing device of any of the previous claims, wherein said visual representation comprises said boundary surface dissected into two parts which are visualized concurrently.

12. The image processing device of any of the previous claims, wherein said visual representation comprises a planar representation of the boundary surface.

13. A workstation comprising an image processing device in accordance with any of the previous claims.

14. A method (300) for visualizing at least one flat anatomical structure adjacent to a body cavity, the method comprising:
receiving (301) data representative of a three-dimensional diagnostic image;
segmenting (302) at least a part of said body cavity in the three-dimensional diagnostic image and determining at least a part of a boundary surface of said body cavity;
determining (303) a surface texture for said boundary surface by projecting image information from a local neighborhood of the boundary surface in said three-dimensional diagnostic image onto said boundary surface; and
generating (304) a visual representation of the at least one flat anatomical structure adjacent to said body cavity by applying and visualizing said surface texture on said boundary surface.

15. A computer readable storage medium encoded with one or more computer executable instructions, which, when executed by a processor of a computing system, causes the computing system to perform the method of claim 14.
